# EUROPÄISCHE PATENTSCHRIFT

(11) **EP 0 269 076 B1**
(45) Veröffentlichungstag und Bekanntmachung des Hinweises auf die Patenterteilung: **13.01.1993**
(21) Anmeldenummer: 87117339.9
(22) Anmeldetag: 25.11.1987
(51) Int. Cl.: G03F 9/00, H01J 9/00, G02B 27/00

(54) **Justiervorrichtung**
Positioning device
Dispositif d'ajustage

(30) Priorität: 27.11.1986 DE 3640616
(43) Veröffentlichungstag der Anmeldung: 01.06.1988
(73) Patentinhaber: Nokia (Deutschland) GmbH, 75175 Pforzheim (DE)
(72) Erfinder: Waldraff, Siegmar, D-7310 Plochingen (DE)

(56) Entgegenhaltungen:
- WO-A-86/03847
- DE-A- 2 605 940
- DE-A- 3 435 567
- GB-A- 2 021 763
- GB-A- 2 143 379
- US-A- 4 176 281
- US-A- 4 179 110
- JOURNAL OF VACUUM SCIENCE & TECHNOLOGY B, Band 4, Nr. 1, Januar-Februar 1986, Seiten 285-289, "Second Series", New York, NY, US; N. BOBROFF et al.: "An optical alignment microscope for x-ray lithography"

## Beschreibung

Die Erfindung bezieht sich auf eine Vorrichtung zum optischen Justieren gemäß dem Oberbegriff des Anspruchs 1.

Aus der DE-OS 34 35 567 ist ein optisches Justierverfahren bekannt, mit dem Dünnglasplatten mit aufgebrachten Zeilen- und Spaltenleitern zueinander und zum Leuchtschirm einer Bildwiedergabevorrichtung justiert werden können. Dabei weisen die Dünnglasplatten in zwei sich diagonal gegenüberliegenden Ecken optische Markierungen auf, die in der einen Platte aus kleinen Rechtecken und in der anderen Platte aus gekreuzten Linien bestehen. Unter einer nicht näher angegebenen optischen Einrichtung werden die Platten zueinander justiert und dann durch eine Verklebung gehalten.

Aus der Schrift DE-A-2 605 940 ist eine Justiereinrichtung für Wafer bekannt. Anliegen dieser Schrift ist es, die Ausrichtung des Wafers zu einer Belichtungsmaske zu vereinfachen. Die Ausrichtung beider vorbenannter Bauteile erfolgt nur zum Zwecke der Belichtung des Wavers durch die Maske. Um die gegenseitige Ausrichtung von Maske und Wafer herzustellen, sind auf dem Wafer und der Maske Strichkreuze angeordnet, wobei das Strichkreuz auf dem Wafer im justierten Zustand vom Strichkreuz auf der Maske umrandet wird. Die Justage beider Maskenkreuze erfolgt unter Verwendung eines Spaltenfeldmikroskops.

Der Erfindung liegt die Aufgabe zugrunde, zum Justieren von mit optischen Markierungen versehenen Platten eine Vorrichtung anzugeben, mit der eine genaue Justage möglich ist.

Die Lösung dieser Aufgabe erfolgt mit den im Anspruch 1 angegebenen Mitteln. Vorteilhafte Ausgestaltungen sind in den Unteransprüchen 2 bis 5 enthalten.

Die Erfindung wird nun anhand von einem in den Figuren gezeigten Ausführungsbeispiel näher erläutert. Es zeigt:
- Fig. 1: schematisch eine Vorrichtung zum optischen Justieren, teilweise im Schnitt, und
- Fig. 2: eine Draufsicht auf eine Justierplatte.

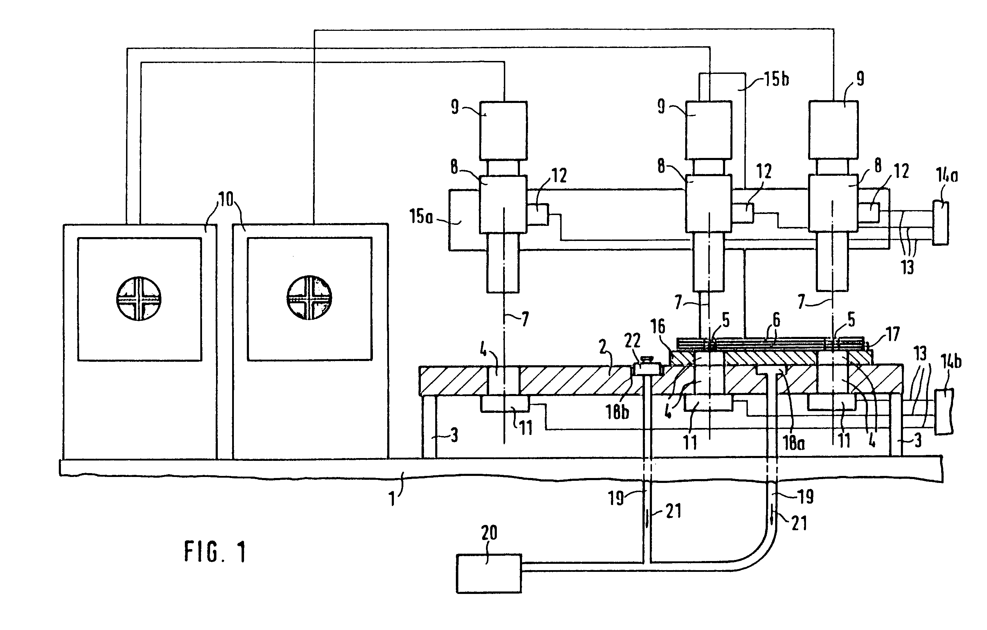

Die in Fig. 1 dargestellte Vorrichtung zum optischen Justieren ruht auf einem Tisch 1. Sie enthält eine Justierplatte 2, die eine Justierunterlage 16 mit Anschlägen 17 trägt und die über Stützen 3 auf dem Tisch 1 steht. Die Justierplatte 2 und die Justierunterlage 16 sind im Schnitt dargestellt, um die in ihr vorhandenen öffnungen 4 deutlich zu zeigen. Die öffnungen 4 sind örtlich so angeordnet, daß sie mit optischen Markierungen in den zueinander zu justierenden Platten 6 fluchten. Diese Platten 6 liegen grob zueinander ausgerichtet auf der Justierunterlage 16. Dabei befinden sich die optischen Markierungen 5 über den öffnungen 4 in der Justierunterlage 16 und der Justierplatte 2.

In Verlängerung der durch die öffnungen 4 verlaufenden optischen Achsen 7 ist je ein Mikroskop 8 mit einer Strichplatte an einer aus zwei senkrecht aufeinanderstehenden Säulen 15a, 15b angeordnet. Die Mikroskope 8 können mit ihrer optischen Achse auf die optische Achse 7 ausgerichtet werden. Auf die Mikroskope 8 ist je eine Kamera 9 aufgesetzt, deren Bilder auf Monitoren 10 wiedergegeben werden. Unterhalb der öffnungen 4 in der Justierplatte 2 ist je eine Durchlichtbeleuchtung 11 angebracht. An jedem Mikroskop 8 ist eine Auflichtbeleuchtung 12 vorhanden. Die Durch- und die Auflichtbeleuchtungen sind über Lichtleiter 13 mit Kaltlichtquellen 14a bzw. 14b verbunden.

In der Justierplatte sind weiterhin Löcher 18a und 18b vorhanden, an die Kanäle 19 angeschlossen sind. Die Kanäle 19 enden an einer Saugpumpe 20. Zwei Pfeile 21 deuten die Saugrichtung in den Kanälen 19 an. Hiermit wird die Justierunterlage 16 auf der Justierplatte 2 gehalten. Das in Fig. 1 nicht benutzte Loch 18b ist durch einen Stopfen 22 verschlossen.

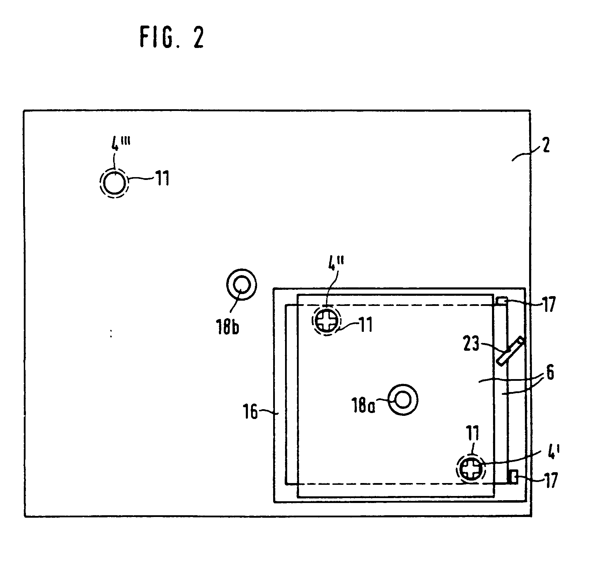

In Fig. 2 ist von der Vorrichtung zum optischen Justieren in einer Draufsicht nur die Justierplatte 2 und die Justierunterlage 16 mit den zwei aufgelegten Platten 6 dargestellt. In der Justierplatte 2 sind drei öffnungen 4', 4'', 4''' vorhanden. Dabei wirkt die öffnung 4' im rechten unteren Eck der Justierplatte einmal mit der öffnung 4'' etwa in der Mitte der Justierplatte und zum anderen mit der öffnung 4''' in der linken oberen Ecke zusammen, je nachdem welches Format die Justierunterlage 16 mit den aufgelegten Platten 6 aufweist. Unterhalb der öffnungen 4 sind die Durchlichtbeleuchtungen 11 gestrichelt angedeutet. Außerdem sind die Löcher 18a und 18b eingezeichnet, um deren Lage zu verdeutlichen.

Die Platten 6 sind aus Metall und die unterschiedlichen optischen Markierungen in ihren sich diagonal gegenüberliegenden Ecken bestehen deswegen aus unterschiedlich geformten Durchbrüchen. So weist die eine Platte einen runden und die andere Platte einen kreuzförmigen Durchbruch auf. Bei mehreren zueinander zu justierenden Platten 6 können die Durchbrüche der optischen Markierungen nicht nur in der Form sondern auch in ihrer Größe abgewandelt sein.

Der Justiervorgang läuft wie nachstehend beschrieben ab, nachdem die Justiervorrichtung eingeschaltet wurde: Die erste Platte 6 wird auf die Justierunterlage 16 gelegt und gegen die Anschläge 17 geschoben. Durch einen Klemmhebel 23 wird die Platte 6 auf der Justierunterlage 16 in dieser Lage gehalten. Die Justierunterlage mit der ersten Platte wird so lange verschoben, bis die Markierungen 5 symmetrisch zu den aufgrund der Strichplatten in den Mikroskopen auf den Monitoren 10 abgebildeten Fadenkreuzen liegen. In dieser Lage wird die Saugpumpe 20 eingeschaltet und dadurch die Justierunterlage auf die Justierplatte 2 gezogen und fixiert. Anschließend wird die zweite Platte 6 aufgelegt und ihre Justiermarken 5 mit den Justiermarken der ersten Platte zur Deckung gebracht. Mit einer geeigneten Auflage (nicht dargestellt) werden die Platten danach beschwert, damit sie planparallel zueinander liegen. An sich diagonal gegenüberliegenden Ecken der Platten 6 werden diese mit einem geeigneten Kleber miteinander verbunden und somit in ihrer Lage zueinander fixiert. Danach können die Platten der Vorrichtung entnommen werden. Die endgültige Verbindung der Platten miteinander kann z.B. durch einen nachfolgenden Frittvorgang geschehen.

Anstatt einzelner Platten können auch Pakete aus miteinander verbundener Platten zueinander justiert werden.

Auf den Monitoren 10 erscheinen die kreuzförmigen Durchbrüche der Markierungen 5 in der ersten Platte 6 als helle Kreuze, welche leicht zu den Fadenkreuzen justiert werden können. Die runden Durchbrüche der Markierungen 5 in der zweiten Platte 6 stellen sich aufgrund der Auflichtbeleuchtung als dunkelgraue Flächen in heller Umgebung dar und sind somit auch einfach auf die Fadenkreuze und die hellen Kreuze auszurichten. Eine genaue Justierung der Platten 6 zueinander liegt vor, wenn die Abbilder der kreuzförmigen und runden Durchbrüche völlig symmetrisch zu den Fadenkreuzen der Monitore liegen.

## Patentansprüche

1. Vorrichtung zum optischen Justieren von mindestens zwei, mit unterschiedlichen optischen Markierungen versehenen Platten
- mit einer Belichtungsanordnung, in der Form einer Auf- oder Durchlichtbeleuchtung und
- mit einer Betrachtungseinrichtung, die zumindest ein Mikroskop mit einer Strichplatte umfaßt und die unter Wirkung von Auf- oder Durchlichtbeleuchtung in der Lage ist, die Abweichungen der optischen Markierungen zur Strichplatte sichtbar zu machen,
**dadurch gekennzeichnet,**
daß zur Justage der mit optischen Markierungen (5) in Form von Durchbrüchen versehenen und später in justierter Form miteinander fest verbundenen Platten (6;6) sowohl eine Auflichtbeleuchtung (12) als auch eine Durchlichtbeleuchtung (11) vorhanden ist und daß beide Beleuchtungseinrichtungen (11; 12) so zusammenwirken, daß die Justage der ersten Platte (6), welche auf der mit Öffnungen (4) im Bereich der Markierungen (5) versehenen Justierunterlage (16) aufliegt, ausschließlich im Durchlichtbetrieb (11) und die Justage jeder weiteren Platte unter Fortwirkung der Durchlichtbeleuchtung (11) im Auflichtbetrieb (12) erfolgt.

2. Vorrichtung nach Anspruch 1, dadurch gekennzeichnet, daß die Justierunterlage (16) Anschläge (17) für die direkt auf ihr liegende Platte (6) aufweist und mit Hilfe einer Saugpumpe (20) auf der Justierplatte (2) fixierbar ist.

3. Vorrichtung nach Anspruch 1, dadurch gekennzeichnet, daß die Durch- und Auflichtbeleuchtung (11, 12) Kaltlichtquellen enthalten.

4. Vorrichtung nach Anspruch 1, dadurch gekennzeichnet, daß die Betrachtungseinrichtung für jede Markierung (5) ein Mikroskop (8) mit Strichplatte, eine Kamera (9) und einen Monitor (10) enthält.

5. Vorrichtung nach Anspruch 1, dadurch gekennzeichnet, daß die Platten (6) aus Metall sind und als Markierungen (5) unterschiedlich geformte Durchbrüche aufweisen.

## Claims

1. Device for optical alignment of at least two plates provided with different optical markings,
- with an illumination arrangement in the form of a vertical illuminator or transilluminator; and
- with an observation device which comprises at least one microscope with a reticle, and which under the action of vertical or transmitted light illumination is capable of making discrepancies between the optical markings and the reticle visible,
characterized in that
to align the plates (6; 6), which are provided with optical markings (5) in the form of perforations and later will be attached permanently to one another in aligned form, both a vertical illuminator (12) and a transilluminator (11) are present; and that the two illumination devices (11; 12) interact in such a way that alignment of the first plate (6), which rests on the alignment substrate (16) that is provided with openings (4) in the region of the markings (5), occurs exclusively in transmitted illumination (11), and alignment of each additional plate occurs in vertical illumination (12) while transmitted illumination (11) continues.

2. Device according to Claim 1, characterized in that the alignment substrate (16) has stops (17) for the plate (6) lying directly on it, and can be immobilized on the alignment plate (2) by means of a suction pump (20).

3. Device according to Claim 1, characterized in that the transilluminator (11) and vertical illuminator (12) contain cold-light sources.

4. Device according to Claim 1, characterized in that the observation device for each marking (5) contains a microscope (8) with reticle, a camera (9), and a monitor (10).

5. Device according to Claim 1, characterized in that the plates (6) are made of metal, and have variously shaped perforations as markings (5).

## Revendications

1. Dispositif pour l'ajustage optique d'au moins deux plaques munies de différents repères optiques
- avec une disposition d'éclairage sous forme d'un éclairage incident ou transmis et
- avec un équipement d'observation comprenant au moins un microscope avec un réticule et qui est capable, sous l'influence de l'éclairage incident ou transmis, de rendre visible les déviations des repères optiques par rapport au réticule,
**caractérisé en ce que**
pour l'ajustage des plaques (6;6) munies des repères optiques (5) sous forme de perforations et ultérieurement reliées à demeure, on dispose aussi bien d'un éclairage incident (12) que d'un éclairage transmis (11) et que les deux dispositifs d'éclairage (11;12) concourent de telle sorte que l'ajustage de la première plaque (6) qui repose sur la base d'ajustage (16) munie d'ouverture (4) dans la zone des repères (5) se fait uniquement en lumière transmise (11) et l'ajustage de chaque autre plaque se fait en lumière incidente (12), la lumière transmise (11) restant en service.

2. Dispositif selon la revendication 1, caractérisé en ce que le dispositif d'ajustage (16) présente des butées (17) pour la plaque qui y est posée directement et qu'il peut être fixé sur la plaque d'ajustage à l'aide d'une pompe aspirante (20).

3. Dispositif selon la revendication 1, caractérisé en ce que l'éclairage transmis et l'éclairage incident (11, 12) comprennent des sources de lumière froide.

4. Dispositif selon la revendication 1, caractérisé en ce que l'équipement d'observation comprend pour chaque repère (5) un microscope (8) avec réticule, une caméra (9) et un moniteur (10).

5. Dispositif selon la revendication 1, caractérisé en ce que les plaques (6) sont en métal et présentent des perforations de différentes formes en tant que repères (5).
